(19) Europäisches Patentamt
European Patent Office
Office européen des brevets

(11) **EP 2 380 017 B1**

(12) # FASCICULE DE BREVET EUROPEEN

(45) Date de publication et mention
de la délivrance du brevet:
**03.04.2013 Bulletin 2013/14**

(21) Numéro de dépôt: **10706289.5**

(22) Date de dépôt: **08.01.2010**

(51) Int Cl.:
***G01N 33/28*** (2006.01)    ***E21B 49/08*** (2006.01)

(86) Numéro de dépôt international:
**PCT/FR2010/050028**

(87) Numéro de publication internationale:
**WO 2010/081981 (22.07.2010 Gazette 2010/29)**

(54) **PROCEDE DE DETERMINATION DE LA TENEUR D'UNE PLURALITE DE COMPOSES CONTENUS DANS UN FLUIDE DE FORAGE**

**VERFAHREN ZUR BESTIMMUNG DER KONZENTRATION MEHRERER VERBINDUNGEN IN EINER BOHRFLÜSSIGKEIT**

**METHOD FOR DETERMINING THE CONCENTRATION OF A PLURALITY OF COMPOUNDS IN A DRILLING FLUID**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **16.01.2009 FR 0950255**

(43) Date de publication de la demande:
**26.10.2011 Bulletin 2011/43**

(73) Titulaire: **Geoservices Equipements**
**95700 Roissy en France (FR)**

(72) Inventeur: **LESSI, Jacques**
**F-78300 Poissy (FR)**

(74) Mandataire: **Vandermolen, Mathieu**
**Intellectual Property Department**
**Etudes & Productions Schlumberger**
**1, rue Henri Becquerel**
**B.P. 202**
**92142 Clamart Cedex (FR)**

(56) Documents cités:
**EP-A2- 1 710 575      US-A- 5 499 531**

- **STANDING M B: "A set of equations for computing equlibrium ratios of a crude oil/natural gas system at pressures below 1,000 psia" JOURNAL OF PETROLEUM TECHNOLOGY., vol. 31, no. 9, SPE 7903, septembre 1979 (1979-09), pages 1193-1195, XP9121844 ISSN: 0149-2136 cité dans la demande**
- **BRUMBOIU A ET AL: "Advances in chromatographic analysis of hydrocarbon gases in drilling fluids - the application of semi-permeable membrane technology to high speed TCD gas chromatography" TRANSACTIONS OF THE SPWLA 46TH ANNUAL LOGGING SYMPOSIUM, juin 2005 (2005-06), pages 1-9, XP002543065 ISSN: 0081-1718**

**Description**

La présente invention concerne un procédé de détermination de la teneur d'une pluralité de composés contenus dans un fluide de forage, du type comprenant :

- extraction hors du fluide de forage d'une fraction gazeuse de chaque composé ;
- mesure d'une information représentative de la fraction gazeuse de chaque composé ;
- obtention, pour chaque premier composé d'un premier groupe de composés, d'un premier facteur de correction reliant l'information mesurée pour la fraction gazeuse du premier composé dans des premières conditions d'extraction données à la teneur dudit premier composé dans le fluide de forage.

Lors du forage d'un puits de pétrole ou de gaz, il est connu de réaliser une analyse des composés gazeux contenus dans le fluide de forage émergeant du puits, ce fluide étant communément désigné par le terme « boue de forage ».

Cette analyse permet de reconstituer la succession géologique des formations traversées lors du forage et intervient dans la détermination des possibilités d'exploitation des gisements de fluides rencontrés.

Cette analyse, réalisée en continu, comprend deux phases principales. Une première phase consiste à prélever de manière continue de la boue de forage en circulation, puis à l'amener dans une enceinte d'extraction où un certain nombre de composés véhiculés par la boue (par exemple les composés hydrocarbonés, le dioxyde de carbone, le sulfure d'hydrogène, l'hélium et l'azote) sont extraits de la boue sous forme gazeuse.

Une deuxième phase consiste à transporter les gaz extraits vers un analyseur où ces gaz sont qualifiés et dans certains cas, quantifiés.

Pour l'extraction des gaz de la boue, un dégazeur à agitation mécanique du type décrit dans FR 2 799 790 est fréquemment utilisé.

Les gaz extraits de la boue, mélangés avec un gaz vecteur introduit dans le dégazeur sont convoyés par aspiration à travers une conduite d'extraction de gaz jusqu'à un analyseur qui permet la quantification des gaz extraits.

Un tel dispositif permet d'extraire de manière significative et précise les gaz très volatils présents dans la boue, par exemple les hydrocarbures en $C_1$ à $C_5$ , notamment lorsqu'il est utilisé avec un dispositif de chauffage de la boue de forage, placé en amont du dégazeur ou dans celui-ci.

Toutefois l'extraction, dans le dégazeur, des composés contenus dans la boue n'est pas totale et l'efficacité d'extraction, définie comme la quantité d'un composé extraite rapportée à la quantité totale de ce même composé initialement contenue dans la boue, dépend de la nature du composé. Il est donc connu de corriger empiriquement la mesure effectuée sur la fraction de gaz extraite pour chaque composé par un facteur de correction dépendant du composé pour fournir une estimation de la teneur réelle du composé dans la boue de forage.

Ceci est notamment le cas dans les boues à base d'huiles ou de produits synthétiques, dans lesquelles les hydrocarbures sont relativement solubles.

Toutefois, les coefficients empiriques utilisés ne donnent pas entière satisfaction et limitent la précision de la mesure.

Pour améliorer cette précision, EP-A-1 710 575 décrit un procédé du type précité dans lequel un même échantillon de calibration du fluide de forage, contenant les différents composés à extraire, subit successivement plusieurs stades d'extraction dans le dégazeur, la quantité de gaz extrait étant mesurée à chaque stade d'extraction.

Sur la base des fractions gazeuses mesurées à chaque stade d'extraction pour chaque composé, un facteur de correction reliant la teneur en un composé donné à la fraction mesurée lors d'un premier stade d'extraction dans le dégazeur peut être déterminé expérimentalement pour chaque composé.

Un tel procédé permet d'améliorer grandement la précision de la mesure. Toutefois, pour le mettre en oeuvre, il est nécessaire de passer au moins deux fois l'échantillon de calibration dans le dégazeur et d'analyser la composition gazeuse des gaz extraits de chaque composé à analyser, ce qui nécessite de disposer d'un échantillon initial de boue contenant une quantité importante de composés dont on veut évaluer l'efficacité d'extraction. En conséquence les résultats peuvent être dans certains cas assez peu précis, notamment pour les composés lourds plus difficiles à extraire de la boue de forage.

Un but de l'invention est donc d'améliorer encore et de manière simple la précision de la détermination de la teneur en une pluralité de composés contenus dans un fluide de forage.

A cet effet, l'invention a pour objet un procédé du type précité, caractérisé en ce que le procédé comprend l'étape suivante :

- calcul, pour au moins chaque deuxième composé d'un deuxième groupe de composés, de la teneur dudit deuxième composé dans le fluide de forage sur la base de l'information représentative mesurée pour le deuxième composé dans des deuxièmes conditions d'extraction données, avantageusement identiques aux premières conditions d'extraction données, et d'un deuxième facteur de correction calculé à partir d'une équation de calcul reliant le deuxième facteur de correction à une pluralité de paramètres indépendants du deuxième composé et des conditions d'extractions données et à un facteur thermodynamique caractéristique du deuxième composé qui dépend d'au moins un paramètre thermodynamique représentatif du deuxième composé, les paramètres indépendants étant déterminés à partir de chaque premier facteur de correction et de l'équation de calcul.

Le procédé selon l'invention peut comprendre l'une ou plusieurs des caractéristiques suivantes, prises(s) isolément ou suivant toute(s) combinaison(s) techniquement possible(s) :

- le facteur thermodynamique caractéristique ($F_i$) est calculé à partir d'au moins un paramètre thermodynamique choisi parmi la température d'ébullition du deuxième composé à la pression atmosphérique, la température critique du deuxième composé et la pression critique du deuxième composé ;
- le facteur thermodynamique caractéristique ($F_i$) est calculé à partir de la température du fluide de forage aux conditions données d'extraction ;
- le facteur thermodynamique caractéristique ($F_i$) est calculé par l'équation :

$$F_i = \frac{\left[\dfrac{1}{\theta_b(i)} - \dfrac{1}{\theta}\right]}{\left[\dfrac{1}{\theta_b(i)} - \dfrac{1}{\theta_c(i)}\right]} \cdot \log\left(\frac{P_c(i)}{P_{atm}}\right)$$

où $\theta$ est la température du fluide de forage aux conditions données d'extraction, $\theta_t(i)$ est la température d'ébullition du deuxième composé à la pression atmosphérique, $\theta_c(i)$ et la température critique du deuxième composé, $P_c(i)$ est la pression critique du deuxième composé et $P_{atm}$ est la pression atmosphérique.
- l'équation de calcul du deuxième facteur de correction ($\rho_2(i)$) comprend au moins un terme de type $a\exp(b\,F_i)$, ou $a$ et $b$ sont des paramètres indépendants du deuxième composé déterminés sur la base de chaque premier facteur de correction, et $F_i$ est le facteur thermodynamique caractéristique du deuxième composé,
- l'étape d'extraction est mise en oeuvre dans une enceinte comprenant des moyens d'agitation du fluide de forage, le deuxième facteur de correction ($\square_2(i)$) étant calculé en fonction d'au moins un paramètre choisi parmi le débit de fluide de forage injecté dans l'enceinte, le volume moyen de fluide de forage présent dans l'enceinte, le volume du ciel gazeux présent dans l'enceinte, et le débit total de fraction gazeuse extrait hors de l'enceinte ;
- le deuxième facteur de correction ($\square_2(i)$) est calculé par l'équation de calcul suivante :

$$\rho_2(i) = 1 + \frac{Q_m}{V_g} \cdot \frac{1}{a \cdot c \times \exp[(b+d) \cdot F_i]} + \frac{Q_m}{V_m} \cdot \frac{1}{c \times \exp(d \cdot F_i)} + \frac{Q_m}{Q_g} \cdot \frac{1}{a \times \exp(b \cdot F_i)} \cdot$$

où $Q_m$ est le débit volumique de fluide de forage injecté dans l'enceinte, $V_m$ est le volume moyen de fluide de forage présent dans l'enceinte, $V_g$ est le volume du ciel gazeux présent dans l'enceinte, $Q_g$ est le débit volumique de fraction gazeuse extrait hors de l'enceinte, $a$, $b$, $c$, $d$ sont les paramètres indépendants du deuxième composé déterminés sur la base de chaque premier facteur de correction ($\rho_1(i)$), et $F_i$ est le facteur thermodynamique caractéristique du deuxième composé ;
- le procédé comprend une étape de détermination de chaque premier facteur de correction ($\rho_1(i)$),

l'étape de détermination comprenant les phases suivantes :

- fourniture d'un échantillon de calibration de fluide de forage contenant au moins chaque premier composé ;
- au moins deux stades d'extraction successives du même échantillon de calibration dans les premières conditions données d'extraction, chaque stade d'extraction comprenant l'extraction hors du fluide de forage d'une fraction gazeuse de chaque premier composé et la mesure d'une information représentative ($y_n(i)$) de la fraction gazeuse de chaque premier composé ;
- calcul, pour chaque premier composé, du premier facteur de correction sur la base des informations représentatives ($y_n(i)$) mesurées à chaque stade d'extraction ;

- le nombre de stades d'extraction successive est égal à 2 ;
- la fourniture de l'échantillon de calibration comprend le mélange d'une quantité donnée d'un fluide de forage et d'une quantité mesurée de chaque premier composé liquide ;
- chaque composé du premier groupe de composés présente une température d'ébullition à pression atmosphérique inférieure à la température d'ébullition à pression atmosphérique de chaque composé du deuxième groupe de composés ;
- chaque composé du premier groupe de composés présente une température d'ébullition à pression atmosphérique supérieure à la température d'ébullition à pression atmosphérique de chaque composé du deuxième groupe de composés ;
- le procédé comprend une étape de correction de la valeur du premier facteur de correction ($\rho_1(i)$) d'au moins un premier composé, l'étape de correction comprenant le calcul pour ledit premier composé d'un premier facteur de correction corrigé sur la base de l'équation de calcul raccordant la pluralité de paramètres (a, b, c, d) indépendants du deuxième composé et sur la base du facteur thermodynamique caractéristique (Fi) du premier composé, et le calcul de la teneur dudit premier composé dans le fluide de forage sur la base de l'information mesurée ($y_1(i)$) pour la fraction gazeuse du premier composé et sur la base du facteur de correction corrigé ;
- le procédé comprend, pour au moins un premier composé du premier groupe de composés, le calcul de la teneur dudit premier composé dans le fluide de forage sur la base de l'information mesurée ($y_1(i)$) pour la fraction gazeuse du premier composé et sur la base du premier facteur de correction ($\rho_1(i)$) ; et
- les premières conditions données d'extraction sont distinctes des deuxièmes conditions données d'extraction, l'équation de calcul comprenant au moins un paramètre représentatif des conditions données d'extraction présentant une première valeur dans les premières conditions d'extraction et une deuxième valeur significativement différente de la première valeur dans les deuxièmes conditions d'extraction, les paramètres indépendants (a, b, c, d) étant déterminés sur la base de l'équation de calcul dans laquelle le paramètre représentatif est égal à sa première valeur, le deuxième facteur de correction étant calculé sur la base de l'équation de calcul dans laquelle le paramètre représentatif est égal à sa deuxième valeur.

L'invention sera mieux comprise à la lecture de la description qui va suivre, donnée uniquement à titre d'exemple, et faite en se référant aux dessins annexés, sur lesquels :

- la Figure 1 est une vue schématique en coupe verticale d'une installation de forage dans lequel un premier procédé de détermination selon l'invention est mis en oeuvre ;
- la Figure 2 est une vue schématique en coupe verticale analogue à la Figure 1 d'un ensemble de calibration destiné à la mise en oeuvre du procédé selon l'invention ;
- la Figure 3 est une courbe représentant les teneurs en différentes fractions gazeuses extraites d'un échantillon de calibration du fluide de forage lors de passages successifs de l'échantillon dans l'étage de calibration de la Figure 2 ;
- la Figure 4 est une courbe représentant les différents facteurs de correction calculés par le procédé selon l'invention en fonction du facteur thermodynamique caractéristique de chaque composé dans un premier exemple de mise en oeuvre du procédé selon l'invention ; et
- la Figure 5 est une vue analogue à la Figure 4 illustrant un deuxième exemple de mise en oeuvre du procédé selon l'invention.

Dans tout ce qui suit, les termes « amont » et « aval » s'entendent par rapport au sens normal de circulation d'un fluide dans une conduite.

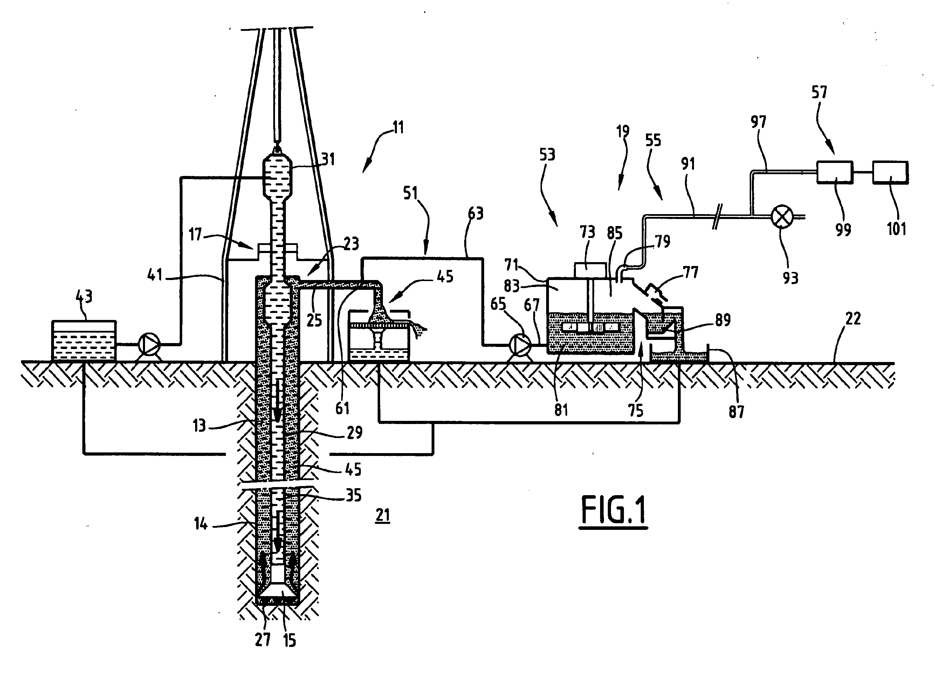

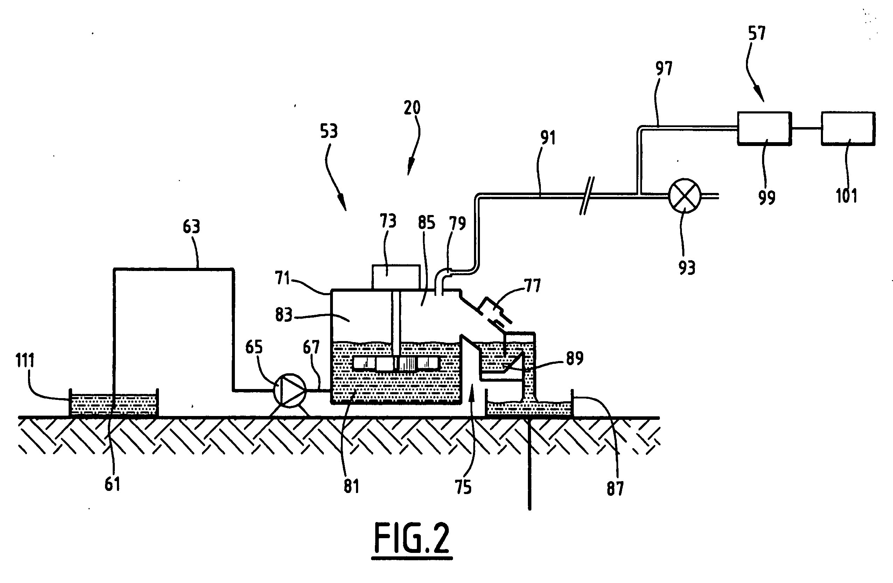

Un premier procédé de détermination selon l'invention est destiné à être mis en oeuvre dans une installation de forage 11 d'un puits de production de fluide, notamment d'hydrocarbures, tel qu'un puits de pétrole. Une telle installation 11 est illustrée par les Figures 1 et 2.

Cette installation 11 comprend un conduit de forage 13 disposé dans une cavité 14 percée par un outil de forage 15 rotatif, une installation de surface 17, et un ensemble d'analyse 19 des gaz contenus dans le fluide de forage.

L'installation 11 comprend en outre un ensemble de calibration 20 illustré sur la Figure 2.

En référence à la Figure 1, le conduit de forage 13 est disposé dans la cavité 14 percée dans le sous-sol 21 par l'outil de forage 15 rotatif. Il s'étend dans une partie supérieure de la hauteur de la cavité 14 qu'il délimite. La cavité 14 présente en outre une partie inférieure délimitée directement par le sous-sol.

Le conduit de forage 13 comporte, au niveau de la surface 22, une tête de puits 23 munie d'une conduite 25 de circulation de fluide.

L'outil de forage 15 comprend, de bas en haut sur la Figure 1, une tête de forage 27, une garniture de forage 29, et une tête 31 d'injection de fluide de forage. L'outil de forage 15 est entraîné en rotation par l'installation de surface 17.

La tête de forage 27 comprend des moyens de perçage 33 des roches du sous-sol 21. Elle est montée sur la partie inférieure de la garniture de forage 29 et est positionnée dans le fond de la cavité 14.

La garniture 29 comprend un ensemble de tubes de forage creux. Ces tubes délimitent un espace interne 35 qui permet d'amener le fluide de forage injecté par la tête 31 depuis la surface 22 jusqu'à la tête de forage 27. A cet effet, la tête d'injection 31 est vissée sur la partie supérieure de la garniture 29.

Ce fluide de forage, communément désigné par le terme « boue de forage », est essentiellement liquide.

L'installation de surface 17 comprend des moyens 41 de support et d'entraînement en rotation de l'outil de forage 15, des moyens 43 d'injection du fluide de forage et un tamis vibrant 45.

Les moyens d'injection 43 sont reliés hydrauliquement à la tête d'injection 31 pour introduire et faire circuler le fluide de forage dans l'espace interne 35 de la garniture de forage 29.

Le fluide de forage est introduit dans l'espace intérieur 35 de la garniture de forage 29 par les moyens d'injection 43. Ce fluide descend jusqu'à la tête de forage 27, et passe dans le conduit de forage 13 à travers la tête de forage 27. Ce fluide refroidit et lubrifie les moyens de perçage 33. Le fluide collecte les déblais solides résultant du forage et remonte par l'espace annulaire défini entre la garniture de forage 29 et les parois du conduit de forage 13, puis est évacué par la conduite de circulation 25.

L'espace interne 35 débouche en regard de la tête de forage 27 pour que le fluide de forage lubrifie les moyens de perçage 33 et remonte dans la cavité 14 le long du conduit 13 jusqu'à la tête de puits 23, en évacuant les débris de forage solides collectés, dans l'espace annulaire 45 défini entre la garniture 29 et le conduit 13.

Le fluide de forage présent dans la cavité 14 maintient une pression hydrostatique dans la cavité, ce qui empêche les parois délimitant la cavité 14 non couvertes par le conduit 13 de se rompre et ce qui évite en outre le dégagement éruptif d'hydrocarbures dans la cavité 14.

La conduite de circulation 25 est raccordée hydrauliquement à la cavité 14 à travers la tête de puits 23 pour recueillir le fluide de forage issu de la cavité 14. Elle est par exemple formée par une goulotte ouverte ou par un conduit tubulaire fermé.

Dans l'exemple représenté sur la Figure 1, la conduite 25 est une conduite tubulaire fermée.

Le tamis vibrant 45 collecte le fluide chargé de résidus de forage qui sort de la conduite de circulation 25 et sépare le liquide des résidus de forage solides.

L'ensemble d'analyse 19 comprend un dispositif de prélèvement 51 de fluide de forage dans la conduite 25, un dispositif d'extraction 53 d'une fraction gazeuse des composés contenus dans le fluide de forage, un dispositif de transport 55 des fractions gazeuse et un dispositif d'analyse 57.

Le dispositif de prélèvement 51 comprend une tête 61 de prélèvement plongée dans la conduite de circulation 25, une conduite de prélèvement 63 raccordée en amont à la tête de prélèvement 61, une pompe 65 raccordée en aval sur la conduite de prélèvement 63, et une conduite 67 d'amenée de fluide de forage dans le dispositif d'extraction 53, raccordée à une sortie de la pompe 65.

Le dispositif de prélèvement 51 est en outre avantageusement muni d'un ensemble de chauffage du fluide prélevé (non représenté). Cet ensemble de chauffage est disposé par exemple entre la pompe 65 et les moyens d'extraction 53 sur la conduite d'amenée 67.

La pompe 65 est par exemple une pompe péristaltique propre à convoyer le fluide de forage prélevé par la tête 61 vers les moyens d'extraction 53 avec un débit volumique $Q_m$ de fluide déterminé.

Le dispositif d'extraction 53 comprend une enceinte 71 dans laquelle débouche la conduite d'amenée 67, un agitateur 73 rotatif monté dans l'enceinte 71, une conduite 75 d'évacuation de boue, une entrée 77 d'injection d'un gaz vecteur et une sortie 79 de prélèvement des fractions gazeuses extraites dans l'enceinte 71.

L'enceinte 71 présente un volume interne par exemple comprise entre 0,04 l et 3 l. Elle définit une partie inférieure 81 de volume moyen $V_m$ , maintenu constant, dans laquelle circule le fluide de forage provenant de la conduite d'amenée 67 et une partie supérieure 83 de volume moyen $V_g$ maintenu constant et définissant un ciel gazeux au dessus du fluide de forage.

La conduite d'amenée de boue 67 débouche dans la partie inférieure 81.

L'agitateur 73 est plongé dans le fluide de forage présent dans la partie inférieure 81. Il est propre à agiter violemment le fluide de forage pour en extraire les gaz extraits.

La conduite d'évacuation 75 s'étend entre un passage à débordement 85 ménagé dans la partie supérieure 83 de l'enceinte 71 et un bac de rétention 87 destiné à recevoir le fluide de forage évacué hors du dispositif d'extraction 53.

La conduite d'évacuation 75 est avantageusement coudée pour former un siphon 89 débouchant en regard du bac de rétention 87 au-dessus du niveau de liquide contenu dans ce bac 87.

En variante, le fluide de forage issu de la conduite 75 est évacué dans la conduite de circulation 25.

Dans cet exemple, l'entrée d'injection de gaz vecteur 77 débouche dans la conduite d'évacuation 75 en amont du siphon 89 au voisinage du passage à débordement 85.

En variante, l'entrée 77 débouche dans la partie supérieure 83 de l'enceinte 71.

La sortie de prélèvement 79 débouche dans une paroi supérieure délimitant la partie supérieure 83 de l'enceinte 71.

Le fluide de forage introduit dans l'enceinte 71 par l'intermédiaire de la conduite d'amenée 67 est évacué par débordement dans la conduite d'évacuation 75 à travers le passage à débordement 85. Une partie du fluide évacué réside temporairement dans le siphon 89, ce qui évite l'entrée de gaz dans la partie supérieure 83 de l'enceinte 71 à travers la conduite d'évacuation 75.

L'introduction de gaz dans l'enceinte 71 s'effectue donc exclusivement par l'entrée d'injection de gaz vecteur 77.

Dans l'exemple illustré par la Figure 1, le gaz vecteur introduit par l'entrée d'introduction 77 est constitué par l'air environnant autour de l'installation, à la pression atmosphérique. En variante, ce gaz vecteur est un autre gaz comme de l'azote ou de l'hélium.

Le dispositif de transport 55 comprend une ligne de transport 91 des gaz extraits vers le dispositif d'analyse 57 et des moyens d'aspiration 93 pour convoyer les gaz extraits hors de l'enceinte 71 à travers la ligne de transport 91.

La ligne de transport 91 s'étend entre la sortie de prélèvement 79 et le dispositif d'analyse 57. Elle présente avantageusement une longueur comprise entre 10 m et 500 m, afin de déporter le dispositif d'analyse 57 à l'écart de la tête de puits 23 dans une zone non explosive.

La ligne de transport 91 est avantageusement réalisée à base d'un matériau métallique ou polymère, notamment le polyéthylène et/ou le polytrétrafluoroéthylène (PTFE).

Le dispositif d'analyse 57 comprend une conduite de prélèvement 97 piquée sur la ligne de transport 91 en amont des moyens d'aspiration 93, une instrumentation 99, et une unité de calcul 101.

L'instrumentation 99 est propre à détecter et à quantifier les fractions gazeuses extraites hors du fluide de forage dans l'enceinte 71 qui ont été transportées à travers la ligne de transport 91.

Cette instrumentation comprend par exemple des appareils à détection infrarouge pour la quantité de dioxyde de carbone, des chromatographes à détecteurs à ionisation de flammes (FID) pour la détection des hydrocarbures ou encore à détecteurs à conductivité thermique (TCD) en fonction des gaz à analyser.

Elle peut également comprendre un système de chromatographie couplé à un spectromètre de masse, ce système étant désigné par l'abréviation anglaise « GC-MS ». Elle peut comprendre un appareil d'analyse isotopique tel que décrit dans la demande EP -A-1 887 343 de la Demanderesse.

La détection et la quantification simultanées en ligne d'une pluralité de composés contenus dans le fluide, sans prise manuelle d'échantillons par un opérateur, est donc possible à des intervalles de temps inférieurs à la minute.

Comme on le verra plus bas, l'unité de calcul 101 est propre à calculer la teneur en une pluralité de composés à analyser présents dans le fluide de forage sur la base de la valeur des fractions gazeuses extraites dans l'enceinte 71, telle que déterminée par l'instrumentation 99, et sur la base de facteurs de correction $p(i)$ propres à chaque composé à analyser.

L'ensemble de calibration 10 représenté sur la Figure 2 est dans cet exemple formé par le dispositif de prélèvement 51, le dispositif d'extraction 53, le dispositif de transport 55 et le dispositif d'analyse 57 de l'ensemble d'analyse 19.

Toutefois, cet ensemble de calibration 20 comprend en outre un bac amont 111 destiné à recevoir un échantillon de calibration du fluide de forage en vue de plusieurs passages successifs de cet échantillon dans le dispositif d'extraction 53 pour y subir plusieurs stades d'extraction.

Dans une variante, au moins le dispositif d'extraction de l'ensemble de calibration 20 est distinct du dispositif d'extraction 53 de l'ensemble d'analyse 19.

Dans ce cas, les dispositifs d'extractions de l'ensemble d'analyse 19 et de l'ensemble de calibration 20 sont sensiblement identiques et présentent par exemple une géométrie d'enceinte 71 identique (notamment en taille ou en volume), et un agitateur 73 identique.

Ainsi, l'extraction des fractions gazeuses à partir de l'échantillon de calibration contenu dans le bac amont 111 peut être effectuée dans les mêmes conditions d'extraction que l'extraction des fractions gazeuses dans un échantillon de fluide de forage prélevé en continu dans la conduite de forage 25 lors de l'analyse de ce fluide.

Ceci implique notamment que la température du fluide de forage dans l'enceinte 71, la pression P du ciel gazeux situé au-dessus du fluide présent dans l'enceinte 71, le débit $Q_m$ de fluide de forage admis dans l'enceinte 71, et le débit $Q_g$ de gaz prélevé, le volume $V_m$ de fluide de forage présent dans l'enceinte 71, et le volume $V_g$ de gaz présent dans l'enceinte 71, la nature de l'agitation ainsi que la vitesse d'agitation sont sensiblement identiques dans les dispositifs d'extraction de l'ensemble de calibration 20 et de l'ensemble d'analyse 19.

Le fluide de forage est par exemple constitué par une boue à l'eau ou une boue à l'huile. Les composés à analyser contenus dans le fluide de forage sont notamment les hydrocarbures en $C_1$ à $C_{10}$ aliphatiques ou aromatiques.

La mise en oeuvre d'un premier procédé de détermination selon l'invention va maintenant être décrite.

Ce procédé comprend une étape initiale d'évaluation des facteurs de correction $\rho_1(i)$ d'un premier groupe de composés i à analyser, une étape d'ajustement d'un modèle reliant les coefficients de correction de chaque composé en fonction d'une de leurs caractéristiques thermodynamiques, une étape de calcul, à partir du modèle ainsi déterminé, des facteurs de corrections $\rho_2(i)$ d'un deuxième groupe de constituants à analyser, puis une étape d'analyse en ligne du contenu gazeux du fluide de forage circulant dans la conduite de circulation 25.

La première étape d'évaluation des facteurs de correction est avantageusement effectuée par une méthode de calibration décrite dans la demande de brevet EP-A-1 710 575 de la Demanderesse, notamment dans l'ensemble de calibration 20 décrit sur la Figure 2.

A cet effet, un échantillon de fluide de forage de calibration est introduit dans le bac amont 111. Cet échantillon contient une pluralité de premiers composés parmi ceux destinés à être analysés dans le fluide de forage circulant dans le conduit de forage 25.

Dans une première variante de mise en oeuvre du procédé ces premiers composés sont avantageusement les plus légers, comme par exemple les hydrocarbures de $C_1$ à $C_5$ ou encore les hydrocarbures de $C_1$ à $C_4$.

La tête de prélèvement 61 est alors plongée dans le bac amont 111 pour pomper l'échantillon de calibration à travers la pompe 65 et la conduite d'admission 67 jusqu'à l'enceinte 71 à un débit $Q_m$.

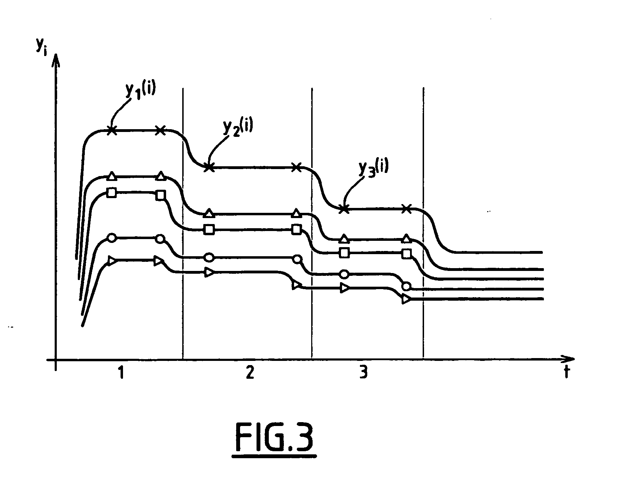

Puis, l'agitateur 73 étant activé, une fraction gazeuse $y_1(i)$ de chaque premier composé à mesurer contenu dans l'échantillon de calibration est extraite et est convoyée par l'intermédiaire du gaz vecteur introduit par l'entrée 77 à travers la ligne de transport 91 jusqu'à l'instrumentation 99. Chaque fraction gazeuse $y_1(i)$ est alors quantifiée pour chaque composé, comme illustré par la Figure 3.

Puis, lorsque l'échantillon de calibration a été sensiblement totalement passé à travers l'enceinte 71 et récupéré dans le bac 87, les bacs 87 et 111 sont inversés pour repasser le même échantillon de calibration dans les conditions données d'extraction à travers le dispositif d'extraction 53.

Une fraction gazeuse $y_2(i)$ de chaque composé à analyser présent dans l'échantillon de calibration est alors extraite lors de cette phase d'extraction.

Puis, cette opération est répétée pour n stades d'extraction successifs, avec n un nombre total de stades d'extraction du même échantillon de calibration compris avantageusement entre 2 et 10 comme représenté sur la Figure 3.

L'unité de calcul 101 détermine ensuite, pour chaque premier composé, la définition d'une suite représentée en échelle logarithmique par une courbe linéaire à partir d'au moins deux couples de valeurs $(n, y_n)$ qui correspondent à un stade d'extraction n des gaz de l'échantillon et à la quantité $y_n(i)$ d'une fraction gazeuse d'un composé donné lors du stade d'extraction n.

Cette suite dépend de la fraction gazeuse $y_1(i)$ extraite lors d'un premier stade d'extraction et d'un paramètre $m(i)$ indépendant du stade d'extraction et caractéristique du composé extrait, du fluide de forage, et des conditions d'extraction.

Avantageusement, la suite déterminée par l'unité de calcul est sensiblement une suite géométrique exponentielle qui est décrite par la formule :

$$y_n(i) = y_1(i) \times \exp[-m(i) \times (n-1)]$$

Ensuite, un premier facteur de correction $\rho_1(i)$ est calculé pour relier la teneur $t_0(i)$ en chaque premier composé dans le fluide de forage à la fraction gazeuse $y_1(i)$ extraire à un débit volumique total de gaz extraits $Q_g$, lors d'un premier passage du fluide dans le dispositif d'extraction 53 à un débit volumique $Q_m$, par l'équation :

$$t_0(i) = \frac{Q_g}{Q_m} \cdot \rho(i) \cdot y_1(i) \quad (1)$$

Ce facteur de correction $\rho_1(i)$ est alors déterminé par l'équation (2) ci-dessous :

$$\rho_1(i) = \frac{1}{y_1(i)} \cdot \sum_1^\infty y_n(i) = \frac{1}{1 - \exp(-m(i))} = \frac{1}{1-\lambda} \quad (2)$$

Dans une variante, les facteurs de correction $\rho_1(i)$ du premier groupe de premier composés sont déterminés par d'autres équations, ou même empiriquement.

Puis, l'étape de calcul des facteurs de corrections $\rho_2(i)$ d'un deuxième groupe de composés à analyser est mise en oeuvre.

Dans une première variante de mise en oeuvre du procédé ce deuxième groupe comprend avantageusement les composés les plus lourds, par exemple les hydrocarbures de $C_5$ à $C_{10}$ pour lesquels la précision de la mesure des fractions gazeuses extraites est plus faible.

A cet effet, chaque deuxième facteur de correction $\rho_2(i)$ est avantageusement calculé à partir d'une équation de calcul posée sur la base d'un coefficient $\alpha(i)$ représentatif de la cinétique de dégazage de chaque deuxième composé dans le dispositif d'extraction 53 aux conditions données d'extraction, et d'un coefficient $K(i)$ représentatif de l'équilibre thermodynamique entre la fraction gazeuse et la fraction liquide de chaque deuxième composé présent dans l'extracteur 71 du dispositif d'extraction 53.

L'équation de calcul de chaque deuxième facteur de correction $\rho_2(i)$ dépend en outre du débit volumique $Q_m$ de boue circulant dans l'enceinte 71, du volume moyen $V_g$ de la partie supérieure 83 formant ciel gazeux, du volume moyen $V_m$ de la partie inférieure 81 contenant le fluide en circulation et du débit total de gaz $Q_g$ prélevé à travers la sortie 79 dans les conditions données d'extraction.

Avantageusement, chaque deuxième facteur correction $\rho_2(i)$ est calculé par l'équation

$$\rho_2(i) = 1 + \frac{Q_m}{V_g} \cdot \frac{1}{\alpha(i) \cdot K(i)} + \frac{Q_m}{V_m} \cdot \frac{1}{\alpha(i)} + \frac{Q_m}{Q_g} \cdot \frac{1}{K(i)} \quad (3)$$

Selon l'invention, les coefficients $K(i)$ et $\alpha(i)$ sont calculés à partir d'un facteur thermodynamique caractéristique $F_i$ propre à chaque deuxième composé qui dépend d'au moins un paramètre thermodynamique représentatif du deuxième composé, et sont calculés aussi à partir d'une pluralité de paramètres a, b, c, d, qui sont indépendants du deuxième composé et des conditions d'extraction et qui sont calculés à partir de chaque premier facteur de correction $\rho_1(i)$ et de l'équation de calcul (3) comme on le verra plus bas.

Avantageusement, le ou chaque paramètre thermodynamique représentatif est choisi parmi la température $\theta_b$(i) d'ébullition à pression atmosphérique du deuxième composé i, de sa température $\theta_c(i)$ critique i et de sa pression $P_c$(i) critique. Le ou chaque facteur thermodynamique caractéristique est avantageusement choisi comme proposé par Hoffman *(*Hoffman et al., « Equilibrium Constants for a Gas-Condensate System », Trans. AIME (1953) 198, 1-10*)* ou de manière améliorée par Standing *(*Standing, « A Set of Equations for Computing Equilibrium Ratios of a Crude Oil/ Natural Gas System at Pressures Below 1,000 psia », SPE 7903,1979*)*.

Le facteur thermodynamique caractéristique $F_i$ est alors en outre calculé en fonction de la température $\theta$ du fluide de forage dans l'enceinte 71 dans les conditions données d'extraction.

De manière avantageuse, le paramètre $F_i$ est obtenu à partir d'une équation reliant tous les paramètres précités, telle que l'équation suivante :

$$F_i = \frac{\left[\dfrac{1}{\theta_b(i)} - \dfrac{1}{\theta}\right]}{\left[\dfrac{1}{\theta_b(i)} - \dfrac{1}{\theta_c(i)}\right]} \cdot \log\left(\frac{P_c(i)}{P_{atm}}\right) \quad (4)$$

Les coefficients $K(i)$ et $\alpha(i)$ sont alors donnés par les équations suivantes :

$$K(i) = a \times \exp(b \cdot F_i) \quad (5)$$

$$\alpha(i) = c \times \exp(d \cdot F_i) \quad (6)$$

Ainsi, l'équation (3) ci-dessus peut être réécrite pour chaque deuxième composé sous la forme suivante :

$$\rho_2(i) = 1 + \frac{Q_m}{V_g} \cdot \frac{1}{a \cdot c \times \exp[(b+d) \cdot F_i)]} + \frac{Q_m}{V_m} \cdot \frac{1}{c \times \exp(d \cdot F_i)} + \frac{Q_m}{Q_g} \cdot \frac{1}{a \times \exp(b \cdot F_i)} \quad (7),$$

dans laquelle chaque deuxième facteur de correction $\rho_2(i)$ dépend de la pluralité de paramètres a, b, c, d, indépendants du deuxième composé, déterminés sur la base de chaque premier facteur de correction $\rho_1(i)$, et dépend également du facteur thermodynamique caractéristique $F_i$ de chaque deuxième composé tel que défini plus haut, ainsi que du débit volumique $Q_m$ de fluide de forage passant à travers l'enceinte 71, du volume $V_g$ de la partie supérieure 83 de l'enceinte comprenant un ciel gazeux, du volume moyen $V_m$ de fluide de forage présent dans l'enceinte et du débit volumique $Q_g$ de gaz extrait de l'enceinte.

Pour déterminer les paramètres a, b, c, d, un système d'équations est posé en appliquant l'équation de calcul (7) ci-dessus à chaque premier facteur de correction $\rho_1(i)$ en fonction du paramètre thermodynamique Fi de chaque premier composé, suivant le système :

$$\left\{ \rho_1(i) = 1 + \frac{Q_m}{V_g} \cdot \frac{1}{a \cdot c \times exp[(b+d) \cdot F_i)]} + \frac{Q_m}{V_m} \cdot \frac{1}{c \times exp(d \cdot F_i)} + \frac{Q_m}{Q_g} \cdot \frac{1}{a \times exp(b \cdot F_i)} \right. \quad (8)$$

Ce système est résolu par une méthode d'optimisation utilisant par exemple la technique des moindres carrés pour obtenir les paramètres a, b, c et d de manière indépendante de chaque deuxième composé.

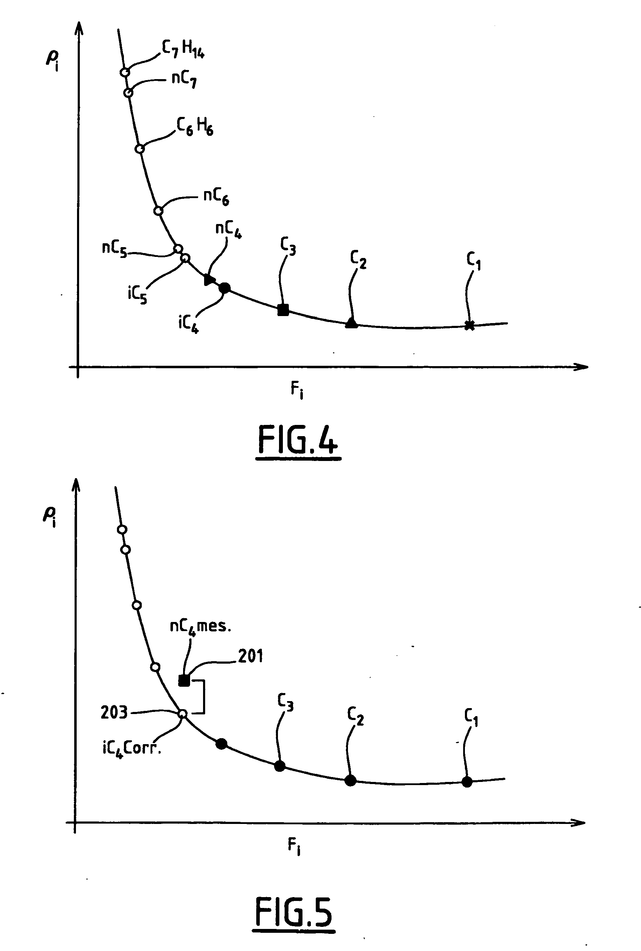

En référence à la Figure 5, une fois les paramètres a, b, c, d obtenus à partir de chaque premier facteur de correction $\rho_1(i)$ représenté en symboles pleins sur la Figure 5, chaque deuxième facteur de correction $\rho_2(i)$ relatif à chaque deuxième composé, représenté par des symboles creux sur la Figure 5, est calculé en utilisant l'équation (7) et en calculant pour chaque deuxième composé le coefficient Fi par l'équation (4).

Le procédé selon l'invention permet donc d'obtenir tous les facteurs de correction des composés à analyser par un simple calcul se fondant sur un nombre peu élevé de facteurs de correction déterminés expérimentalement ou empiriquement.

Ceci augmente grandement la précision de la mesure, notamment pour les composés relativement lourds qui sont présents en faible quantité dans l'échantillon de calibration et qui sont difficiles à extraire du fluide de forage.

Dans une variante, l'ensemble des facteurs de correction pour chaque composé à analyser, y compris les premiers composés, est recalculé à partir de l'équation de calcul (7).

L'étape d'analyse est ensuite mise en oeuvre lors du forage. Pour effectuer le forage, l'outil de forage 15 est entraîné en rotation par l'installation de surface 41. Le fluide de forage est introduit dans l'espace intérieur 35 de la garniture de forage 29 par les moyens d'injection 43. Ce fluide descend jusqu'à la tête de forage 27, et passe dans le conduit de forage 13 à travers la tête de forage 27. Ce fluide refroidit et lubrifie les moyens de perçage 33. Le fluide collecte les déblais solides résultant du forage et remonte par l'espace annulaire défini entre la garniture de forage 29 et les parois du conduit de forage 13, puis est évacué par la conduite de circulation 25.

Dans cette étape, la tête de prélèvement 61 est disposée dans le conduit de circulation 25, en aval du tamis vibrant 45. La pompe 65 est alors activée pour prélever du fluide de forage dans la conduite 25 au débit volumique $Q_m$ donné et l'introduire dans l'enceinte 71 à travers la conduite d'admission 67. Le fluide de forage contient alors les composants à analyser.

L'agitateur 73 est activé pour agiter le fluide de forage présent dans la partie inférieure 81 et extraire une fraction gazeuse $y_1(i)$ de chaque composé i présent dans le fluide, de forage. Cette fraction gazeuse $y_1(i)$ est convoyée jusqu'à l'instrumentation 99 à travers la ligne de transport 91 pour déterminer sa valeur.

Lors de l'extraction, la température du fluide de forage dans l'enceinte 71, la pression P du ciel gazeux situé au-dessus du fluide présent dans l'enceinte 71, le débit $Q_m$ de fluide de forage admis dans l'enceinte 71, et le débit $Q_g$ de gaz prélevé, la nature de l'agitation ainsi que la vitesse d'agitation sont sensiblement identiques par rapport aux mêmes paramètres utilisés lors de l'étape de calibration.

Puis, l'unité de calcul 101 en déduit la valeur de la teneur en chaque composé i dans le fluide de forage par l'équation (1), où les facteurs de correction p(i) d'au moins un deuxième groupe de composés sont calculés par l'équation (7) ci-dessus.

Dans une variante de mise en oeuvre du procédé, représentée sur la Figure 6, une pluralité de premier premiers facteurs de correction $\rho_1(i)$, représentés en symboles pleins sur la Figure est déterminée expérimentalement ou empiriquement.

Toutefois, au moins un premier facteur de correction 201 déterminé expérimentalement ou empiriquement n'est pas pris en compte pour effectuer la détermination des paramètres a, b, c, d.

Ce facteur de correction 201 est alors exclu et remplacé par un facteur de correction 203 calculé par l'équation (7).

Le procédé selon l'invention permet ainsi de corriger les mesures expérimentales douteuses ou erronées en raison par exemple de contaminants présents dans l'échantillon de calibration.

Dans une variante, les deuxièmes composés sont identiques aux premiers composés, tous les facteurs de correction $\rho_1(i)$ étant remplacés par des facteurs de correction corrigés.

Dans une variante, le coefficient Fi est égal à la température $\theta_b(i)$ d'ébullition à pression atmosphérique du composé.

Dans une variante de mise en oeuvre, il est possible d'améliorer la détermination des coefficients de correction $\rho_1(i)$ en utilisant seulement deux stades d'extractions successifs de l'échantillon de calibration. Dans ce cas, les coefficients de correction $\rho_1(i)$ obtenus par l'équation (2) sont en effet très sensibles aux erreurs de mesures, le coefficient de décroissance exponentiel m(i) de l'équation (2) n'étant plus obtenu par l'intermédiaire d'une régression linéaire mais par le calcul direct d'une droite passant par 2 points. Le calcul des paramètres a, b, c et d par la résolution du système d'équations (8) et le calcul de coefficients de correction optimisés 203 pour chaque premier composé, comme décrit plus haut permet, en introduisant un système d'équations surdimensionné, de réduire ces erreurs de mesure.

Le procédé selon l'invention permet en outre d'améliorer l'application de la méthode de calibration décrite dans la demande de brevet EP-A-1 710 575 de la Demanderesse. En effet pour la mise en oeuvre de cette méthode il faut disposer d'un échantillon de boue contenant des hydrocarbures en quantité suffisante. Cet échantillon de boue est généralement prélevé en cours de forage après avoir traversé des formations contenant des hydrocarbures. Ceci rend difficile l'obtention des coefficients de correction $\rho_1(i)$ en cours de forage. Il est même quelquefois impossible d'obtenir tous les coefficients $\rho_1(i)$ faute de traverser des formations contenant suffisamment d'hydrocarbures. Le procédé selon la présente invention permet alors de déterminer ces coefficients à partir de mélanges artificiels de boue et d'hydrocarbures formant un échantillon de calibration.

Ces mélanges sont réalisés par exemple en émulsifiant en surface des composés hydrocarbonés lourds liquides aux conditions atmosphériques (par exemple en $C_5$ à $C_8$ tels que du pentane à l'octane) en quantité suffisante pour fournir des quantités de gaz extraites mesurables avec une bonne précision. Ces composés sont alors utilisés comme premiers composés permettant de déterminer les paramètres a, b, c et d.

Les coefficients de correction pour les seconds composés soit trop légers et difficiles à mélanger à la boue du fait de leur état gazeux (par exemple en $C_1$ à $C_4$ tels que du méthane au butane), soit difficiles à manipuler du fait de leur toxicité (composés aromatiques) sont avantageusement déterminés par application de la méthode décrite plus haut.

Un autre avantage que présente le procédé selon l'invention, est de permettre le calcul des coefficients de correction à appliquer pour chaque premier ou deuxième composé dans le cas où les deuxièmes conditions d'extraction dans l'étape d'analyse diffèrent sensiblement des premières conditions d'extraction au cours de l'étape de calibration. Dans ce cas, l'un au moins de la température $\theta$, du débit de fluide introduit $Q_m$, du débit de gaz extrait $Q_g$, du volume de fluide $V_m$ et du volume de ciel gazeux $V_g$ est significativement différent, par exemple d'au moins 5%, dans les premières conditions d'extraction et dans les deuxièmes conditions d'extraction.

A cet effet, les paramètres a, b, c et d indépendants de chaque composé et des conditions d'extraction sont déterminés à l'étape d'ajustement du modèle comme décrit précédemment, en utilisant le système d'équations (8) dans lequel les paramètres représentatifs des conditions d'extraction $\theta$, $Q_m$, $Q_g$, $V_m$ et $V_g$ de chaque équation de calcul sont ceux qui règnent dans les premières conditions d'extraction.

Puis, une fois déterminés les coefficients a, b, c, d, les coefficients de correction p(i) pour chaque composé sont recalculés à l'aide des équations (4) et (7) à partir des nouvelles valeurs des paramètres représentatifs des conditions d'extraction $\theta$, $Q_m$, $Q_g$, $V_m$ et $V_g$ aux deuxièmes conditions d'extraction.

L'unité de calcul 101 peut de plus prendre en compte toute variation de ces paramètres représentatifs des conditions d'extraction pendant l'étape d'analyse en ajustant en temps réel les coefficients de correction pour chaque composé mesuré à partir de nouvelles valeurs de $\theta$, $Q_m$, $Q_g$, $V_m$ et $V_g$.

**Revendications**

1. Procédé de détermination de la teneur ($t_0(i)$) d'une pluralité de composés contenus dans un fluide de forage, du type comprenant les étapes suivantes :

   - extraction hors du fluide de forage d'une fraction gazeuse de chaque composé;
   - mesure d'une information représentative ($y_1(i)$) de la fraction gazeuse de chaque composé ;
   - obtention, pour chaque premier composé d'un premier groupe de composés, d'un premier facteur de correction ($\rho_1(i)$) reliant l'information mesurée ($y_1(i)$) pour la fraction gazeuse du premier composé dans des premières conditions d'extraction données à la teneur dudit premier composé dans le fluide de forage ;
   **caractérisé en ce que** le procédé comprend l'étape suivante :

   - calcul, pour au moins chaque deuxième composé d'un deuxième groupe de composés, de la teneur dudit deuxième composé dans le fluide de forage sur la base de l'information représentative mesurée pour le deuxième composé dans des deuxièmes conditions d'extraction données, avantageusement identiques aux premières conditions d'extraction données, et d'un deuxième facteur de correction ($\rho_2(i)$) calculé à partir d'une équation de calcul reliant le deuxième facteur de correction ($\rho_2(i)$) à une pluralité de paramètres (a, b, c, d) indépendants du deuxième composé et des conditions d'extractions données et à un facteur thermodynamique caractéristique du deuxième composé (Fi) qui dépend d'au moins un paramètre thermodynamique représentatif du deuxième composé, les paramètres indépendants (a, b, c, d) étant déterminés à partir de chaque premier facteur de correction ($\rho_1(i)$) et de l'équation de calcul.

**2.** Procédé selon la revendication 1, **caractérisé en ce que** le facteur thermodynamique caractéristique (Fi) est calculé à partir d'au moins un paramètre thermodynamique choisi parmi la température d'ébullition du deuxième composé à la pression atmosphérique, la température critique du deuxième composé et la pression critique du deuxième composé.

**3.** Procédé selon la revendication 1 ou 2, **caractérisé en ce que** le facteur thermodynamique caractéristique (Fi) est calculé à partir de la température du fluide de forage aux conditions données d'extraction.

**4.** Procédé selon la revendication 2 ou 3, **caractérisé en ce que** le facteur thermodynamique caractéristique (Fi) est calculé par l'équation :

$$F_i = \frac{\left[\dfrac{1}{\theta_b(i)} - \dfrac{1}{\theta}\right]}{\left[\dfrac{1}{\theta_b(i)} - \dfrac{1}{\theta_c(i)}\right]} \cdot \log\left(\frac{P_c(i)}{P_{atm}}\right)$$

où $\theta$ est la température du fluide de forage aux conditions données d'extraction, $\theta_b(i)$ est la température d'ébullition du deuxième composé à la pression atmosphérique, $\theta_c(i)$ et la température critique du deuxième composé, $P_c(i)$ est la pression critique du deuxième composé et $P_{atm}$ est la pression atmosphérique.

**5.** Procédé selon l'une quelconque des revendications précédentes, **caractérisé en ce que** l'équation de calcul du deuxième facteur de correction ($\rho_2(i)$) comprend au moins un terme de type $a \exp(b \cdot F_i)$, ou a et b sont des paramètres indépendants du deuxième composé déterminés sur la base de chaque premier facteur de correction, et Fi est le facteur thermodynamique caractéristique du deuxième composé.

**6.** Procédé selon l'une quelconque des revendications précédentes, **caractérisé en ce que** l'étape d'extraction est mise en oeuvre dans une enceinte (71) comprenant des moyens (73) d'agitation du fluide de forage, le deuxième facteur de correction ($\rho_2(i)$) étant calculé en fonction d'au moins un paramètre choisi parmi le débit de fluide de forage injecté dans l'enceinte, le volume moyen de fluide de forage présent dans l'enceinte (71), le volume du ciel gazeux présent dans l'enceinte (71), et le débit total de fraction gazeuse extrait hors de l'enceinte (71).

**7.** Procédé selon la revendication 6, prise en combinaison avec la revendication 5, **caractérisé en ce que** le deuxième facteur de correction ($\rho_2(i)$) est calculé par l'équation de calcul suivante :

$$\rho_2(i) = 1 + \frac{Q_m}{V_g} \cdot \frac{1}{a \cdot c \times \exp[(b+d) \cdot F_i]} + \frac{Q_m}{V_m} \cdot \frac{1}{c \times \exp(d \cdot F_i)} + \frac{Q_m}{Q_g} \cdot \frac{1}{a \times \exp(b \cdot F_i)},$$

où $Q_m$ est le débit volumique de fluide de forage injecté dans l'enceinte, $V_m$ est le volume moyen de fluide de forage présent dans l'enceinte, $V_g$ est le volume du ciel gazeux présent dans l'enceinte, $Q_g$ est le débit volumique de fraction gazeuse extrait hors de l'enceinte, a, b, c, d sont les paramètres indépendants du deuxième composé déterminés sur la base de chaque premier facteur de correction ($\rho_1(i)$), et Fi est le facteur thermodynamique caractéristique du deuxième composé.

**8.** Procédé selon l'une quelconque des revendications précédentes, **caractérisé en ce qu'**il comprend une étape de détermination de chaque premier facteur de correction ($\rho_1(1)$),
l'étape de détermination comprenant les phases suivantes :

- fourniture d'un échantillon de calibration de fluide de forage contenant au moins chaque premier composé ;
- au moins deux stades d'extraction successives du même échantillon de calibration dans les premières conditions données d'extraction, chaque stade d'extraction comprenant l'extraction hors du fluide de forage d'une fraction gazeuse de chaque premier composé et la mesure d'une information représentative ($y_n(i)$) de la fraction gazeuse de chaque premier composé ;
- calcul, pour chaque premier composé, du premier facteur de correction sur la base des informations repré-

sentatives ($y_n(i)$) mesurées à chaque stade d'extraction.

9. Procédé selon la revendication 8, **caractérisé en ce que** le nombre de stades d'extraction successive est égal à 2.

10. Procédé selon la revendication 8 ou 9, **caractérisé en ce que** la fourniture de l'échantillon de calibration comprend le mélange d'une quantité donnée de fluide de forage et d'une quantité mesurée de chaque premier composé liquide.

11. Procédé selon l'une quelconque des revendications précédentes, **caractérisé en ce que** chaque composé du premier groupe de composés présente une température d'ébullition à pression atmosphérique inférieure à la température d'ébullition à pression atmosphérique de chaque composé du deuxième groupe de composés.

12. Procédé selon l'une quelconque des revendications précédentes, **caractérisé en ce que** chaque composé du premier groupe de composés présente une température d'ébullition à pression atmosphérique supérieure à la température d'ébullition à pression atmosphérique de chaque composé du deuxième groupe de composés.

13. Procédé selon l'une quelconque des revendications précédentes, **caractérisé en ce qu'**il comprend une étape de correction de la valeur du premier facteur de correction ($\rho_1(i)$) d'au moins un premier composé, l'étape de correction comprenant le calcul pour ledit premier composé d'un premier facteur de correction corrigé sur la base de l'équation de calcul raccordant la pluralité de paramètres (a, b, c, d) indépendants du deuxième composé et sur la base du facteur thermodynamique caractéristique (Fi) du premier composé, et le calcul de la teneur dudit premier composé dans le fluide de forage sur la base de l'information mesurée ($y_1(i)$) pour la fraction gazeuse du premier composé et sur la base du facteur de correction corrigé.

14. Procédé selon l'une quelconque des revendications précédentes, **caractérisé en ce qu'**il comprend, pour au moins un premier composé du premier groupe de composés, le calcul de la teneur dudit premier composé dans le fluide de forage sur la base de l'information mesurée ($y_1(i)$) pour la fraction gazeuse du premier composé et sur la base du premier facteur de correction ($\rho_1(i)$).

15. Procédé selon l'une quelconque des revendications précédentes, **caractérisé en ce que** les premières conditions données d'extraction sont distinctes des deuxièmes conditions données d'extraction, l'équation de calcul comprenant au moins un paramètre représentatif des conditions données d'extraction présentant une première valeur dans les premières conditions d'extraction et une deuxième valeur significativement différente de la première valeur dans les deuxièmes conditions d'extraction, les paramètres indépendants (a, b, c, d) étant déterminés sur la base de l'équation de calcul dans laquelle le paramètre représentatif est égal à sa première valeur, le deuxième facteur de correction étant calculé sur la base de l'équation de calcul dans laquelle le paramètre représentatif est égal à sa deuxième valeur.

**Claims**

1. A method for determining the content ($t_0(i)$) of a plurality of compounds contained in a drilling fluid, of the type comprising the following steps of:

   - extracting out of the drilling fluid a gas fraction of each compound;
   - measuring a representative information (y1(i)) of the gas fraction of each compound;
   - obtaining, for each first compound of a first group of compounds, a first correcting factor ($\rho$1(i)) relating the measured information ($y_1(i)$) for the gas fraction of the first compound under first given extraction conditions to the content of said first compound in the drilling fluid;
   **characterised in that** the method comprises the following step of:

   - calculating, for at least each second compound of a second group of compounds, the content of said second compound in the drilling fluid based on the representative information measured for the second compound under second given extraction conditions, advantageously identical to the first given extraction conditions, and a second correcting factor ($\rho_2(i)$) calculated from a calculation equation relating the second correcting factor ($\rho_2(i)$) to a plurality of parameters (a, b, c, d) independent of the second compound and given extraction conditions and to a characteristic thermodynamic factor of the second compound (Fi) which depends at least on a representative thermodynamic parameter of the second compound, the independent parameters (a, b, c, d) being determined from each first correcting factor ($\rho_1(i)$) and the calculation equation.

2. The method according to claim 1, **characterised in that** the characteristic thermodynamic factor (Fi) is calculated from at least one thermodynamic parameter selected from the boiling temperature of the second compound at atmospheric pressure, the critical temperature of the second compound and the critical pressure of the second compound.

3. The method according to claim 1 or 2, **characterised in that** the characteristic thermodynamic factor (Fi) is calculated from the temperature of the drilling fluid under the given extraction conditions.

4. The method according to claim 2 or 3, **characterised in that** the characteristic thermodynamic factor (Fi) is calculated from the equation:

$$F_i = \frac{\dfrac{1}{\theta_b(i)} - \dfrac{1}{\theta}}{\dfrac{1}{\theta_b(i)} - \dfrac{1}{\theta_c(i)}} \cdot \log\left(\frac{P_c(i)}{P_{atm}}\right)$$

where $\theta$ is the temperature of the drilling fluid under the given extraction conditions, $\theta_b(i)$ is the boiling temperature of the second compound at atmospheric pressure, $\theta_c(i)$ is the critical temperature of the second compound, $P_c(i)$ is the critical pressure of the second compound and $P_{atm}$ is the atmospheric pressure.

5. The method according to any of the preceding claims, **characterised in that** the calculation equation of the second correcting factor ($\rho_2(i)$) comprises at least an a x exp(b·$F_i$) type term, where a and b are parameters independent of the second compound being determined based on each first correcting factor, and Fi is the characteristic thermodynamic factor of the second compound.

6. The method according to any of the preceding claims, **characterised in that** the extracting step is implemented in an enclosure (71) comprising means (73) for stirring the drilling fluid, the second correcting factor ($\rho_2(i)$) being calculated as a function of at least one parameter selected from the flow rate of drilling fluid injected into the enclosure, the average volume of drilling fluid present in the enclosure (71), the volume of the overhead gas present in the enclosure (71) and the total flow rate of gas fraction extracted out of the enclosure (71).

7. The method according to claim 6, taken in combination with claim 5, **characterised in that** the second correcting factor ($\rho_2(i)$) is calculated by the following calculation equation:

$$\rho_2(i) = 1 + \frac{Q_m}{V_g} \cdot \frac{1}{a \cdot c \times \exp[(b+d) \cdot F_i]} + \frac{Q_m}{V_m} \cdot \frac{1}{c \times \exp(d \cdot F_i)} + \frac{Q_m}{Q_g} \cdot \frac{1}{a \times \exp(b \cdot F_i)},$$

where $Q_m$ is the volume flow rate of drilling fluid injected into the enclosure, $V_m$ is the average volume of drilling fluid present in the enclosure, $V_g$ is the volume of overhead gas present in the enclosure, $Q_g$ is the volume flow rate of gas fraction extracted out of the enclosure, a, b, c, d are the parameters independent of the second compound being determined based on each first correcting factor ($\rho_1(i)$), and Fi is the characteristic thermodynamic factor of the second compound.

8. The method according to any of the preceding claims, **characterised in that** it comprises a step of determining each first correcting factor ($\rho_1(i)$), the determining step comprising the following phases:

   - providing a calibration sample of drilling fluid containing at least each first compound;
   - at least two successive extraction stages of the same calibration sample under the first given extraction conditions, each extraction stage comprising extracting out of the drilling fluid a gas fraction of each first compound and measuring representative information ($y_n(i)$) of the gas fraction of each first compound;
   - calculating, for each first compound, the first correcting factor based on the representative information ($y_n(i)$)

measured at each extraction stage.

9. The method according to claim 8, **characterised in that** the number of successive extraction stages is equal to 2.

10. The method according to claim 8 or 9, **characterised in that** providing the calibration sample comprises mixing a given amount of drilling fluid and a measured amount of each first liquid compound.

11. The method according to any of the preceding claims, **characterised in that** each compound of the first group of compounds has a boiling temperature at atmospheric pressure being lower than the boiling temperature at atmospheric pressure of each compound of the second group of compounds.

12. The method according to any of the preceding claims, **characterised in that** each compound of the first group of compounds has a boiling temperature at atmospheric pressure being higher than the boiling temperature at atmospheric pressure of each compound of the second group of compounds.

13. The method according to any of the preceding claims, **characterised in that** it comprises a step of correcting the value of the first correcting factor ($\rho_1(i)$) of at least one first compound, the correcting step comprising calculating for said first compound a first correcting factor corrected based on the calculation equation connecting the plurality of parameters (a, b, c, d) independent of the second compound and based on the characteristic thermodynamic factor (Fi) of the first compound, and calculating the content of said first compound in the drilling fluid based on the measured information ($y_1(i)$) for the gas fraction of the first compound and based on the corrected correcting factor.

14. The method according to any of the preceding claims, **characterised in that** it comprises, for at least one first compound of the first group of compounds, calculating the content of said first compound in the drilling fluid based on the measured information ($y_1(i)$) for the gas fraction of the first compound and based on the first correcting factor ($\rho_1(i)$).

15. The method according to any of the preceding claims, **characterised in that** the first given extraction conditions are distinct from the second given extraction conditions, the calculation equation comprising at least one parameter representative of the given extraction conditions having a first value under the first extraction conditions, and a second value significantly different from the first value under the second extraction conditions, the independent parameters (a, b, c, d) being determined based on the calculation equation wherein the representative parameter is equal to its first value, the second correcting factor being calculated based on the calculation equation wherein the representative parameter is equal to its second value.

**Patentansprüche**

1. Verfahren zum Bestimmen des Gehaltes ($t_0(i)$) mehrerer Zusammensetzungen, die in einem Bohrfluid enthalten sind, des Typs, der die folgenden Schritte umfasst:

- Extrahieren eines gasförmigen Anteils jeder Zusammensetzung aus dem Bohrfluid;
- Messen repräsentativer Informationen ($y_1(1)$) des gasförmigen Anteils jeder Zusammensetzung;
- Erhalten für jede erste Zusammensetzung einer ersten Gruppe von Zusammensetzungen eines ersten Korrekturfaktors ($\rho_1(i)$), der die Messinformation ($y_1(i)$) für den gasförmigen Anteil der ersten Zusammensetzung unter gegebenen ersten Extraktionsbedingungen mit dem Gehalt der ersten Zusammensetzung in dem Bohrfluid in Beziehung setzt;
**dadurch gekennzeichnet, dass** das Verfahren den folgenden Schritt umfasst:

- Berechnen für wenigstens jede zweite Zusammensetzung einer zweiten Gruppe von Zusammensetzungen des Gehalts der zweiten Zusammensetzung in dem Bohrfluid anhand der gemessenen repräsentativen Information für die zweite Zusammensetzung unter gegebenen zweiten Extraktionsbedingungen, die vorteilhaft mit den gegebenen ersten Extraktionsbedingungen übereinstimmen, und eines zweiten Korrekturfaktors ($\rho_2(i)$), der anhand einer Berechnungsgleichung berechnet wird, die den zweiten Korrekturfaktor ($\rho_2(i)$) mit mehreren unabhängigen Parametern (a, b, c, d) der zweiten Zusammensetzung und den gegebenen Extraktionsbedingungen und mit einem charakteristischen thermodynamischen Faktor der zweiten Zusammensetzung (Fi), der wenigstens von einem repräsentativen thermodynamischen Parameter der zweiten Zusammensetzung abhängt, in Beziehung setzt, wobei die unabhängigen Parameter (a, b, c, d) anhand jedes ersten Korrekturfaktors ($\rho_1$(i)) und der Berechnungsgleichung bestimmt werden.

2. Verfahren nach Anspruch 1, **dadurch gekennzeichnet, dass** der charakteristische thermodynamische Faktor (Fi) wenigstens anhand eines thermodynamischen Parameters berechnet wird, der unter der Siedetemperatur der zweiten Zusammensetzung bei Atmosphärendruck, der kritischen Temperatur der zweiten Zusammensetzung und dem kritischen Druck der zweiten Zusammensetzung gewählt ist.

3. Verfahren nach Anspruch 1 oder 2, **dadurch gekennzeichnet, dass** der charakteristische thermodynamische Faktor (Fi) anhand der Temperatur des Bohrfluids unter gegebenen Extraktionsbedingungen berechnet wird.

4. Verfahren nach Anspruch 2 oder 3, **dadurch gekennzeichnet, dass** der charakteristische thermodynamische Faktor (Fi) anhand der folgenden Gleichung berechnet wird:

$$F_i = \frac{\left| \dfrac{1}{\theta_b(i)} - \dfrac{1}{\theta} \right|}{\left[ \dfrac{1}{\theta_b(i)} - \dfrac{1}{\theta_c(i)} \right]} \cdot \log\left( \frac{P_c(i)}{P_{atm}} \right)$$

wobei $\theta$ die Temperatur des Bohrfluids unter gegebenen Extraktionsbedingungen ist, $\theta_b$(i) die Siedetemperatur der zweiten Zusammensetzung bei Atmosphärendruck ist, $\theta_c$(i) die kritische Temperatur der zweiten Zusammensetzung ist, $P_c$(i) der kritische Druck der zweiten Zusammensetzung ist und $P_{atm}$ der Atmosphärendruck ist.

5. Verfahren nach einem der vorhergehenden Ansprüche, **dadurch gekennzeichnet, dass** die Gleichung zum Berechnen des zweiten Korrekturfaktors ($\rho_2$(i)) wenigstens einen Term des Typs a·exp(b·F$_i$) enthält, wobei a und b unabhängige Parameter der zweiten Zusammensetzung sind, die anhand jedes ersten Korrekturfaktors bestimmt werden, und Fi der charakteristische thermodynamische Faktor der zweiten Zusammensetzung ist.

6. Verfahren nach einem der vorhergehenden Ansprüche, **dadurch gekennzeichnet, dass** der Extraktionsschritt in einem Behälter (71) ausgeführt wird, der Mittel (73) zum Rühren des Bohrfluids enthält, wobei der zweite Korrekturfaktor ($\rho_2$(i)) als Funktion wenigstens eines Parameters berechnet wird, der aus dem Durchsatz von in dem Behälter eingespritztem Bohrfluid, dem mittleren Volumen des Bohrfluids, das in dem Behälter (71) vorhanden ist, dem Volumen der gasförmigen Deckschicht, die in dem Behälter (71) vorhanden ist, und dem Gesamtdurchsatz des aus dem Behälter (71) extrahierten gasförmigen Anteils gewählt ist.

7. Verfahren nach Anspruch 6 in Kombination mit Anspruch 5, **dadurch gekennzeichnet, dass** der zweite Korrekturfaktor ($\rho_2$(i)) durch die folgende Berechnungsgleichung berechnet wird:

$$\rho_2(i) = 1 + \frac{Q_m}{V_g} \cdot \frac{1}{a \cdot c \times \exp\left[(b+d) \cdot F_i\right]} + \frac{Q_m}{V_m} \cdot \frac{1}{c \times \exp(d \cdot F_i)} + \frac{Q_m}{Q_g} \cdot \frac{1}{a \times \exp(b \cdot F_i)},$$

wobei $Q_m$ der volumetrische Durchsatz des in den Behälter eingespritzten Bohrfluids ist, $V_m$ das mittlere Volumen des in dem Behälter vorhandenen Bohrfluids ist, $V_g$ das Volumen der in dem Behälter vorhandenen gasförmigen Deckschicht ist, $Q_g$ der volumetrische Durchsatz des gasförmigen Anteils, der aus dem Behälter extrahiert wird, ist, a, b, c und d die unabhängigen Parameter der zweiten Zusammensetzung sind, die anhand jedes ersten Korrekturfaktors ($\rho_1$(i)) bestimmt werden, und Fi der charakteristische thermodynamische Faktor der zweiten Zusammensetzung ist.

8. Verfahren nach einem der vorhergehenden Ansprüche, **dadurch gekennzeichnet, dass** es einen Schritt des Bestimmens jedes ersten Korrekturfaktors ($\rho_1$(i)) umfasst, wobei der Bestimmungsschritt die folgenden Phasen umfasst:

- Liefern einer Kalibrierungsprobe des Bohrfluids, das wenigstens jede erste Zusammensetzung enthält;
- wenigstens zwei aufeinanderfolgende Stadien des Extrahierens derselben Kalibrierungsprobe unter den gegebenen ersten Extraktionsbedingungen, wobei jedes Extraktionsstadium das Extrahieren eines gasförmigen Anteils jeder ersten Zusammensetzung aus dem Bohrfluid und das Messen einer repräsentativen Information $(y_n(i))$ des gasförmigen Anteils jeder ersten Zusammensetzung umfasst;
- Berechnen für jede erste Zusammensetzung des ersten Korrekturfaktors anhand der repräsentativen Informationen $(y_n(i))$, die in jedem Extraktionsstadium gemessen werden.

9. Verfahren nach Anspruch 8, **dadurch gekennzeichnet, dass** die Anzahl aufeinanderfolgender Extraktionsstadien gleich 2 ist.

10. Verfahren nach Anspruch 8 oder 9, **dadurch gekennzeichnet, dass** das Liefern der Kalibrierungsprobe das Mischen einer gegebenen Menge des Bohrfluids und einer gemessenen Menge jeder ersten flüssigen Zusammensetzung umfasst.

11. Verfahren nach einem der vorhergehenden Ansprüche, **dadurch gekennzeichnet, dass** jede Zusammensetzung der ersten Gruppe von Zusammensetzungen eine Siedetemperatur bei Atmosphärendruck aufweist, die kleiner ist als die Siedetemperatur bei Atmosphärendruck jeder Zusammensetzung der zweiten Gruppe von Zusammensetzungen.

12. Verfahren nach einem der vorhergehenden Ansprüche, **dadurch gekennzeichnet, dass** jede Zusammensetzung der ersten Gruppe von Zusammensetzungen eine Siedetemperatur bei Atmosphärendruck aufweist, die größer ist als die Siedetemperatur bei Atmosphärendruck jeder Zusammensetzung der zweiten Gruppe von Zusammensetzungen.

13. Verfahren nach einem der vorhergehenden Ansprüche, **dadurch gekennzeichnet, dass** es einen Schritt des Korrigierens des Wertes des ersten Korrekturfaktors $(\rho_1(i))$ wenigstens einer ersten Zusammensetzung, wobei der Korrekturschritt das Berechnen für die erste Zusammensetzung eines ersten korrigierten Korrekturfaktors anhand der Berechnungsgleichung, der die mehreren unabhängigen Parameter (a, b, c, d) der zweiten Zusammensetzung in Beziehung setzt, und anhand des charakteristischen thermodynamischen Faktors (Fi) der ersten Zusammensetzung, und das Berechnen des Gehaltes der ersten Zusammensetzung in dem Bohrfluid anhand der gemessenen Information $(y_1(i))$ für den gasförmigen Anteil der ersten Zusammensetzung und anhand des korrigierten Korrekturfaktors umfasst.

14. Verfahren nach einem der vorhergehenden Ansprüche, **dadurch gekennzeichnet, dass** es für wenigstens eine erste Zusammensetzung der ersten Gruppe von Zusammensetzungen das Berechnen des Gehaltes der ersten Zusammensetzung in dem Bohrfluid anhand der gemessenen Information $(y_1(i))$ für den gasförmigen Anteil der ersten Zusammensetzung und anhand des ersten Korrekturfaktors $(\rho_1(i))$ umfasst.

15. Verfahren nach einem der vorhergehenden Ansprüche, **dadurch gekennzeichnet, dass** die gegebenen ersten Extraktionsbedingungen von den gegebenen zweiten Extraktionsbedingungen verschieden sind, wobei die Berechnungsgleichung wenigstens einen Parameter umfasst, der die gegebenen Extraktionsbedingungen repräsentiert und der unter den ersten Extraktionsbedingungen einen ersten Wert und unter den zweiten Extraktionsbedingungen einen zweiten Wert, der von dem ersten Wert signifikant verschieden ist, besitzt, wobei die unabhängigen Parameter (a, b, c, d) anhand der Berechnungsgleichung bestimmt werden, in der der repräsentative Parameter gleich dem ersten Wert ist, und wobei der zweite Korrekturfaktor anhand der Berechnungsgleichung berechnet wird, in der der repräsentative Parameter gleich dem zweiten Wert ist.

FIG.1

FIG.2

# FIG.3

## FIG.4

## FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2799790
- EP 1710575 A
- EP 1887343 A

**Littérature non-brevet citée dans la description**

- **HOFFMAN et al.** Equilibrium Constants for a Gas-Condensate System. *Trans. AIME,* 1953, vol. 198, 1-10
- A Set of Equations for Computing Equilibrium Ratios of a Crude Oil/Natural Gas System at Pressures Below 1,000 psia. *SPE 7903,* 1979